# EUROPEAN PATENT APPLICATION

(11) **EP 4 401 233 A1**
(43) Date of publication of application: **17.07.2024**
(21) Application number: 23777669.5
(22) Date of filing: 14.02.2023
(51) Int. Cl.: H01M 50/553

(54) **ELECTRODE TERMINAL, POLE ASSEMBLY, BATTERY, AND ELECTRIC DEVICE**

(30) Priority: 31.03.2022 CN 202210337176
(71) Applicant: Contemporary Amperex Technology Co., Limited, Ningde, Fujian 352100 (CN)
(72) Inventor: JIANG, Liwen, Ningde, Fujian 352100 (CN); FANG, Wumei, Ningde, Fujian 352100 (CN)
(74) Representative: Laufhütte, Dieter
(86) International application number: PCT/CN2023/075983
(87) International publication number: WO 2023/185290

(57) **Abstract**

This disclosure provides an electrode terminal, a pole assembly, a battery, and an electric device. The electrode terminal includes a pole body, where the pole body includes a first electrical connection portion and a second electrical connection portion that is electrically connected to the first electrical connection portion. The second electrical connection portion is adapted to the first electrical connection portion in shape, such that electrical connection between the electrode terminals of two battery cells is implemented through fitting in shape between the first electrical connection portion of the electrode terminal of one battery cell and the second electrical connection portion of the electrode terminal of the other battery cell. According to the technical solutions of this disclosure, when battery cells are arranged into groups, damage to surfaces of battery cells or related components or short circuit caused by welding slag produced is avoided, and a structure and assembly process of the battery are simplified.

## Description

### CROSS-REFERENCE TO RELATED APPLICATIONS

This application claims priority to Chinese patent application 202210337176.0, filed on March 31, 2022 and entitled "ELECTRODE TERMINAL, POLE ASSEMBLY, BATTERY, AND ELECTRIC DEVICE", which is incorporated herein by reference in its entirety.

### TECHNICAL FIELD

This disclosure relates to the field of battery technologies, and in particular, to an electrode terminal, a pole assembly, a battery, and an electric device.

### BACKGROUND

In the related art, electrical connection between inside and outside of a battery cell is implemented through a pole. When multiple battery cells are arranged into groups, electrical connections are implemented by welding electrical connection pieces to poles of different battery cells.

Electrical connection pieces and electrode terminals are often made of different materials, leading to high difficulties in welding. When different battery cells are connected by welding, the battery cells are not easy to disassemble, leading to high difficulties in maintenance. Additionally, welding slag produced during welding may cause damage to surfaces of battery cells or related components, or even cause a risk of short circuit.

### SUMMARY

This disclosure is intended to provide an electrode terminal, a pole assembly, a battery, and an electric device, so as to solve the technical problems in the related art that when electrical connections between different battery cells are implemented by welding electrical connection pieces to poles of the battery cell, difficulties in welding are high, the battery cells are not easy to disassemble, and welding slag produced during welding may cause damage to surfaces of battery cells or related components, or even cause a risk of short circuit.

A first aspect of this disclosure provides an electrode terminal configured to input current to and output current from a battery cell. The electrode terminal includes a pole body, where the pole body includes a first electrical connection portion and a second electrical connection portion. The second electrical connection portion is electrically connected to the first electrical connection portion, and the second electrical connection portion is adapted to the first electrical connection portion in shape, such that electrical connection between the electrode terminals of two battery cells is implemented through fitting in shape between the first electrical connection portion of one battery cell and the second electrical connection portion of the other battery cell.

For the electrode terminal of this disclosure, the first electrical connection portion of the electrode terminal is adapted to the second electrical connection portion in shape, such that electrical connection between the electrode terminals of two battery cells is implemented through fitting in shape between the first electrical connection portion of the electrode terminal of one battery cell and the second electrical connection portion of the electrode terminal of the other battery cell. In this way, when different battery cells using such electrode terminal are arranged into groups, it is not necessary to implement electrical connection by welding. Instead, it is only necessary to make the first electrical connection portion of one of two electrode poles of two battery cells in a group fit with the second electrical connection portion of the other one in shape, making the grouping of corresponding battery cells convenient and quick, reducing the difficulties in disassembly, and avoiding damage to surfaces of battery cells or related components or short circuit caused by welding slag produced. In addition, the electrode terminal of this disclosure integrates the functions of a pole and an electrical connection piece in the related art, simplifying a structure and assembly process of a battery that includes such electrode terminal.

For the electrode terminal in some embodiments, the first electrical connection portion includes a slot, and the second electrical connection portion includes a plug adapted to the slot in shape.

The first electrical connection portion and the second electrical connection portion are respectively provided as including a slot and a plug. In this way, when two battery cells are arranged into a group, it is only necessary to make the slot of the first electrical connection portion of one of two electrode terminals to be electrically connected to each other fit with the plug of the second electrical connection portion of the other one to complete the required electrical connection. This allows for easy grouping, disassembly, and maintenance of battery cells.

For the electrode terminal in some embodiments, the slot is a single flat mouth, and the plug is a plug-in piece adapted to the single flat mouth in shape.

The provision of the slot as a single flat mouth and the plug as a plug-in piece allows for easy processing and operation and high connection stability.

For the electrode terminal in some embodiments, the pole body of the electrode terminal is sheet-shaped.

The pole body is provided as sheet-shaped, and reasonable arrangement of relative positions of the pole body and a cell housing of the battery cell allows for smaller distance from a side of the electrode terminal away from the cell housing to the cell housing, thus leading to relatively reduced overall sizes of the battery cell and the battery that uses the battery cell.

For the electrode terminal in some embodiments, the first electrical connection portion and the second electrical connection portion are respectively disposed at two opposite ends of the pole body.

The first electrical connection portion and the second electrical connection portion being disposed at two opposite ends of the pole body making it easy to achieve docking of the first electrical connection portion and the second electrical connection portion when different battery cells are arranged into groups, making the grouping convenient and quick.

For the electrode terminal in some embodiments, the electrode terminal further includes a connection hole provided in the pole body, where the connection hole is configured to allow for electrical connection between the pole body and a sampling component that performs sampling for operational parameters of the battery cell in which the electrode terminal is located.

The provision of the connection hole on the electrode terminal for electrical connection with the sampling component makes it easy for the sampling component to be electrically connected to the electrode terminal to perform sampling on the battery cell. The sampling component and the electrode terminal can be electrically connected through riveting, threaded connections, or the like, which can avoid welding connection, conducive to reducing the damage to the surfaces of related components or the risk of short circuit caused by welding slag.

For the electrode terminal in some embodiments, the electrode terminal further includes a first insulation portion, where the first insulation portion is disposed on a surface of the pole body.

The provision of the first insulation portion on the surface of the pole body of the electrode terminal facilitates electrical insulation between the pole body and adjacent electrical elements, which helps reduce the risk of short circuit.

For the electrode terminal in some embodiments, the first electrical connection portion is configured to be electrically connected to an adapter of the battery cell, and the first insulation portion covers at least an outer side of the first electrical connection portion of the electrode terminal.

The above configuration facilitates electrical insulation between a portion, of the pole body, connected to the adapter and adjacent electrical elements, which helps reduce the risk of short circuit.

For the electrode terminal in some embodiments, the first electrical connection portion is integrally formed with or directly connected to the second electrical connection portion.

The first electrical connection portion being integrally formed with or directly connected to the second electrical connection portion allows for simple and stable electrical structure and convenient and quick processing of the electrode terminal.

A second aspect of this disclosure provides a pole assembly including the electrode terminal according to the first aspect of this disclosure and an adapter. The adapter is electrically connected to the pole body of the electrode terminal and is configured to be electrically connected to an electrode assembly of a battery cell in which the adapter is located.

The pole assembly of this disclosure has the advantages of the electrode terminal of this disclosure.

For the pole assembly in some embodiments of this disclosure, the pole body of the electrode terminal is sheet-shaped, and the adapter is connected to a side of the pole body.

The pole body is provided as sheet-shaped, and the adapter is connected to a side of the pole body, which can allow for smaller distance from a side of the electrode terminal, in the battery cell that uses the pole assembly, away from the cell housing to the cell housing, thus leading to relatively reduced overall sizes of the battery cell and the battery that uses the battery cell.

For the pole assembly in some embodiments of this disclosure, the adapter includes an adapting piece perpendicularly connected to the pole body.

The adapting piece that is perpendicularly connected to the pole body being provided in the adapter facilitates reasonable arrangement of the electrode assembly, cell housing, adapter, and electrode terminal of the battery cell. This is not only conducive to reducing the volume of the battery cell that uses the pole assembly, but also conducive to reducing space occupation during grouping of battery cells, so as to help reduce the volume of the battery that uses the battery cell.

For the pole assembly in some embodiments of this disclosure, the first electrical connection portion and the second electrical connection portion are respectively disposed at two opposite ends of the pole body, and two side surfaces of the adapting piece respectively face toward the first electrical connection portion and the second electrical connection portion.

The two side surfaces of the adapting piece respectively facing toward the first electrical connection portion and the second electrical connection portion facilitates reasonable arrangement of the electrode assembly, cell housing, adapter, and electrode terminal of the battery cell. This is not only conducive to reducing the volume of the battery cell that uses the pole assembly, but also conducive to reducing space occupation during grouping of battery cells, so as to help reduce the volume of the battery that uses the battery cell.

For the pole assembly in some embodiments of this disclosure, the adapter is integrally formed with or directly connected to the electrode terminal.

The adapter being integrally formed with or directly connected to the electrode terminal allows for simple and stable electrical structure and convenient and quick processing of the pole assembly.

For the pole assembly in some embodiments of this disclosure, the pole assembly further includes a second insulation portion, where the second insulation portion is disposed on a side of the electrode terminal close to the adapter.

The second insulation portion being disposed on the side of the electrode terminal close to the adapter is conducive to insulating the pole body and the adapter from the cell housing of the battery cell after the pole assembly is assembled into the cell housing of the battery cell.

A third aspect of this disclosure provides a battery including a battery cell. The battery cell includes an electrode assembly and the electrode terminal according to the first aspect of this disclosure or the pole assembly according to the second aspect of this disclosure, where the electrode terminal is electrically connected to the electrode assembly of the battery cell.

The battery according to the embodiments of this disclosure has the same advantages as the electrode terminal according to the embodiments of this disclosure and the pole assembly according to the embodiments of this disclosure.

For the battery in some embodiments, the battery cell includes two electrode poles, where the two electrode poles are electrically connected to an anode tab and cathode tab of the electrode assembly respectively.

The two electrode poles of the battery cell being electrically connected to the anode tab and cathode tab of the electrode assembly respectively allows all electrode poles to implement quick and convenient electrical connections through fitting in shape during grouping of battery cells, without the need for welding.

For the battery in some embodiments, two electrode poles of the battery cell are arranged side by side, and an arrangement direction of the first electrical connection portion and second electrical connection portion of one electrode terminal is the same as an arrangement direction of the first electrical connection portion and second electrical connection portion of the other electrode terminal; or two electrode poles of the battery cell are arranged side by side, and an arrangement direction of the first electrical connection portion and second electrical connection portion of one electrode terminal is opposite to an arrangement direction of the first electrical connection portion and second electrical connection portion of the other electrode terminal.

The above arrangement of the electrode terminals of the battery cell allows for flexible arrangement of directions of the electrode terminals based on grouping needs of battery cells, facilitating quick grouping of battery cells.

For the battery in some embodiments, the battery includes at least two battery cells, where electrical connection between the electrode terminals of each adjacent pair of battery cells is implemented through fitting in shape between the first electrical connection portion of one battery cell and the second electrical connection portion of the other battery cell.

The electrical connection between the electrode terminals of each adjacent pair of battery cells being implemented through fitting in shape between the first electrical connection portion of the electrode terminal of one battery cell and the second electrical connection portion of the electrode terminal of the other battery cell allows for electrical connections implemented without welding, making the grouping of battery cells convenient and quick, reducing the difficulties in disassembly, and avoiding damage to surfaces of battery cells or related components or short circuit caused by welding slag produced.

For the battery in some embodiments, the battery cell includes the pole assembly, and the adapter of the pole assembly is directly connected to the electrode assembly of the battery cell in which the pole assembly is located.

The adapter being directly connected to the electrode assembly of the battery cell allows for simple and stable electrical structure and convenient and quick processing of the battery cell.

A fourth aspect of this disclosure provides an electric device including the battery according to the third aspect of this disclosure. The battery is configured to supply power to the electric device.

The electric device according to the embodiments of this disclosure has the same advantages as the battery according to the embodiments of this disclosure.

Other features and advantages of this disclosure become apparent from the following detailed description of exemplary embodiments of this disclosure with reference to the accompanying drawings.

### BRIEF DESCRIPTION OF DRAWINGS

The accompanying drawings described herein are intended for better understanding of this disclosure and constitute a part of this application. Illustrative embodiments and descriptions thereof in this disclosure are intended to interpret this disclosure without constituting any inappropriate limitation on this disclosure. In the accompanying drawings:
FIG. 1 is a schematic structural diagram of a vehicle as an electric device according to an embodiment of this disclosure.
FIG. 2 is a schematic diagram of a bottom structure of a vehicle as an electric device according to an embodiment of this disclosure.
FIG. 3 is a schematic structural diagram of a battery according to an embodiment of this disclosure.
FIG. 4 is a schematic structural diagram of a step in a grouping process of battery cells in a battery according to an embodiment of this disclosure.
FIG. 5 is a schematic structural diagram of a step in a grouping process of battery cells in a battery according to an embodiment of this disclosure.
FIG. 6 is a schematic structural diagram of a battery cell in a battery according to an embodiment of this disclosure.
FIG. 7 is a schematic structural diagram of a connection between a pole assembly and an electrode assembly in a battery cell in a battery according to an embodiment of this disclosure.
FIG. 8 is a schematic structural diagram of a pole assembly of a battery cell in a battery according to an embodiment of this disclosure.
FIG. 9 is a schematic structural top view of the pole assembly in FIG. 8.
FIG. 10 is a schematic structural diagram of a direction A-A in FIG. 9.

### DESCRIPTION OF EMBODIMENTS

The following clearly and completely describes technical solutions in embodiments of this disclosure with reference to the accompanying drawings in the embodiments of this disclosure. Apparently, the described embodiments are some but not all embodiments of this disclosure. The following description of at least one exemplary embodiment is merely illustrative and definitely is not construed as any limitation on this disclosure or on application or use of this disclosure. All other embodiments obtained by persons of ordinary skill in the art based on the embodiments of this disclosure without creative efforts shall fall within the protection scope of this disclosure.

Unless otherwise specified, relative arrangements of components and steps, numerical expressions, and numerical values set forth in these embodiments do not constitute a limitation on the scope of this disclosure. In addition, it should be understood that, for ease of description, sizes of various parts shown in the accompanying drawings are not drawn to scale. The technologies, methods, and devices known to those of ordinary skill in the related art may not be discussed in detail, but in appropriate circumstances, the technologies, methods, and devices should be regarded as being authorized as a part of the specification. In all examples shown and discussed herein, any specified value should be interpreted as merely illustrative rather than restrictive. Therefore, other examples of the exemplary embodiments may have different values. It should be noted that similar reference numerals and letters indicate similar items in the following drawings, and therefore once an item is defined in one drawing, it does not need to be further discussed in the subsequent drawings.

In the description of this disclosure, it should be understood that the use of terms such as "first", "second", and the like to define parts is merely for the purpose of distinguishing between the corresponding parts. Unless otherwise stated, these terms do not have special meanings, and therefore shall not be construed as limitations on the protection scope of this disclosure.

In the description of this disclosure, it should be understood that orientations or positional relationships indicated by orientation terms such as "front, rear, upper, lower, left, and right", "transverse, vertical, perpendicular, and horizontal", and "top and bottom" are usually based on the orientations or positional relationships as shown in the accompanying drawings. In the absence of any indication to the contrary, these terms are merely for the ease and brevity of description of this disclosure rather than indicating or implying that the means or components mentioned must have specific orientations or must be constructed or manipulated according to specific orientations, and therefore shall not be construed as any limitations on embodiments of this application. The orientation terms "inside and outside" refer to the inside and outside with respect to the contours of the components themselves.

In the process of implementing this disclosure, the inventors have found that in the related art, when battery cells are arranged into groups, electrical connections between different battery cells are generally implemented by welding electrical connection pieces to poles. Difficulties in welding between electrical connection pieces to electrode terminals are high, and when battery cells are connected by welding, the battery cells are not easy to disassemble, leading to high difficulties in maintenance. Additionally, welding slag produced during welding may cause damage to surfaces of battery cells or related components, or even cause a risk of short circuit.

To solve the foregoing technical problems in batteries and battery cells, embodiments of this disclosure provide an electrode terminal that can implement electrical connections between battery cells without the need for welding. Further, the embodiments of this disclosure also provide a pole assembly that includes such electrode terminal, a battery that includes such electrode terminal or pole assembly, and an electric device that includes such battery.

The embodiments of this disclosure provide an electric device that uses a battery as a power source, where the battery is configured to supply electrical energy to the electric device. The electric device may be but is not limited to a mobile phone, a portable device, a notebook computer, an electric bicycle, an electric vehicle, a ship, a spacecraft, an electric toy, an electric tool, or the like. For example, the spacecraft includes an airplane, a rocket, a space shuttle, a spaceship, and the like; the electric toy includes a fixed or mobile electric toy, for example, a game console, an electric toy car, an electric toy ship, an electric toy airplane, and the like; the electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer.

The battery mentioned in the embodiments of this disclosure is a single physical module that includes one or more battery cells for providing a higher voltage and capacity. The battery may include three forms: battery cell, battery module, and battery pack.

A battery cell is a smallest element constituting a battery module or battery pack. A plurality of battery cells can be connected in series and/or in parallel through electrode terminals for various application scenarios, in some high-power application scenarios such as an electric vehicle.

A battery module is formed by electrically connecting a specific quantity of battery cells and putting the battery cells into a frame to protect the battery cells from external impact, heat, vibration, and the like. With the development of technologies, the battery module may be omitted, that is, the battery pack is directly formed using battery cells.

A battery pack is a final state of a battery system assembled in a high-power electric device such as an electric vehicle. The battery pack typically includes a box configured to enclose one or more battery cells. The box can prevent liquids or other foreign matter from affecting charging or discharging of the battery cell. The box is generally formed by a box shell and a box cover. Most existing battery packs are formed by assembling various control and protection systems such as a battery management system (Battery Management System, BMS) and a thermal management part on one or more battery modules. With such improvement, weight energy density and volumetric energy density of the battery system are increased, and the number of parts is remarkably reduced.

For ease of description, an electric device being a vehicle D according to an embodiment of this disclosure is used as an example for the following description.

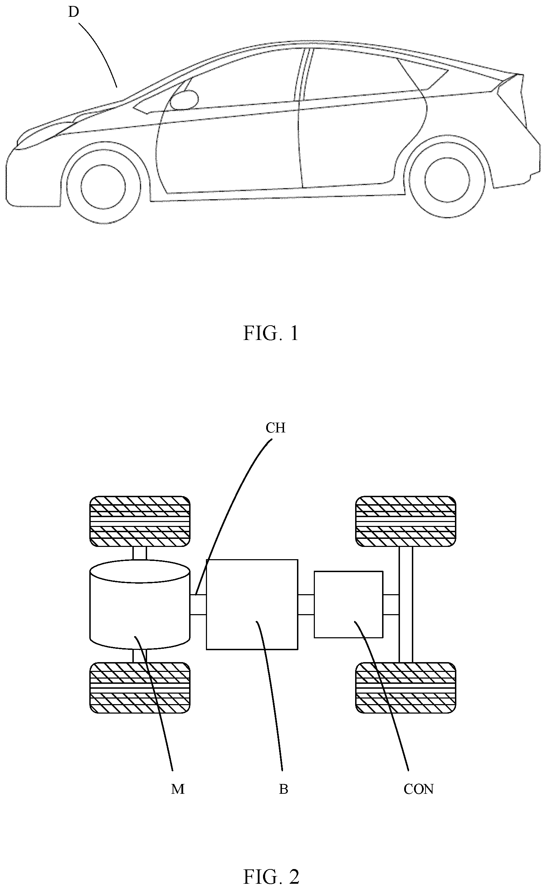

Refer to FIGs. 1 and 2. FIG. 1 is a schematic structural diagram of a vehicle D according to some embodiments of this disclosure. The vehicle D may be a fossil fuel vehicle, a natural-gas vehicle, or a new energy vehicle, where the new energy vehicle may be a battery electric vehicle, a hybrid electric vehicle, a range-extended vehicle, or the like. The vehicle D is provided with a battery B inside, where the battery B may be disposed at the bottom, front or rear of the vehicle D. The battery B may be configured to supply power to the vehicle D, for example, may be used as an operational power source for the vehicle D.

FIG. 2 shows a bottom structure of the vehicle shown in FIG. 1. The battery B may be disposed on the chassis CH of the vehicle D. The vehicle D may further include a controller CON and a motor M. The battery B is configured to provide electrical energy for operation of the motor M and other components in the vehicle D, and the controller CON is configured to control the motor M to operate, for example, to satisfy power needs of start, navigation, and running of the vehicle D.

In some embodiments of this disclosure, the battery B can be used as not only the operational power source for the vehicle D but also a driving power source for the vehicle D, replacing or partially replacing fossil fuel or natural gas to provide driving traction for the vehicle D.

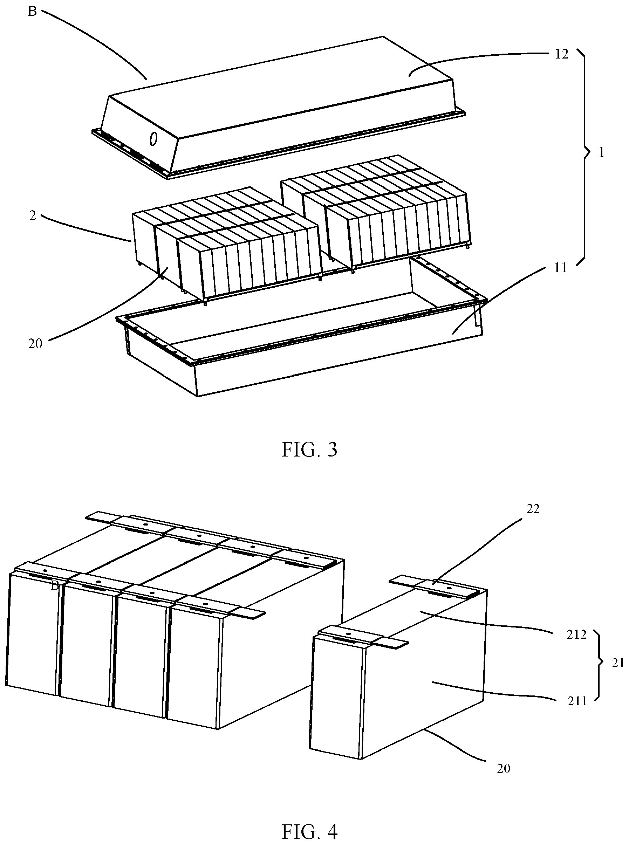

Referring to FIG. 3, FIG. 3 is an exploded view of a battery B according to some embodiments of this disclosure.

The battery B includes a box 1 and a battery cell 20 accommodated in the box 1. The box 1 includes a box shell 11 and a box cover 12 snap-fitted with the box shell 11, and the box 1 is configured to provide an accommodating space for the battery cell 20. In the above embodiments, the box 1 is a cuboid as a whole. In an embodiment not shown in the figure, the box 1 may alternatively be other shapes, for example, a cylinder.

In the battery B, the battery cell 20 is provided in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 1.

As shown in FIG. 3, the battery B may include a plurality of battery cells 20 that are first connected in series, parallel, or series-parallel to form battery groups 2. The battery groups 2 may form a battery module. A plurality of battery groups 2 are then connected in series, parallel, or series-parallel to form an entirety which is accommodated in the box 1. The battery B may further include other structures. For example, the battery B may further include a busbar configured to implement electrical connection between the plurality of battery cells 20.

The battery cell may include a lithium-ion battery, a lithium-sulfur battery, a sodium-lithium-ion battery, a sodium-ion battery, a magnesium-ion battery, or the like, or may be a primary battery, a secondary battery, or the like. This is not limited in the embodiments of this disclosure. The battery cell may be cylindrical, flat, cuboid, or of other shapes. This is not limited in the embodiments of this disclosure either. Battery cells are typically divided into three types by packaging method: cylindrical cell, prismatic cell, and pouch cell. This is not limited in the embodiments of this disclosure either.

The battery cell mainly includes an electrode assembly, a housing, and an end cover assembly, with the electrode assembly enclosed in the housing through an end cover of the end cover assembly.

For the battery cell 20 provided in some embodiments of this disclosure, the battery cell 20 includes a cell housing 21, a pole assembly 22, and an electrode assembly 23.

The cell housing may be of various shapes and sizes, such as a rectangular shape, a cylindrical shape, and a hexagonal prism shape. Specifically, the shape of the cell housing may be determined based on a specific shape and size of the electrode assembly. The cell housing may be made of materials such as copper, iron, aluminum, stainless steel, aluminum alloy, and plastic.

The electrode assembly 23 is disposed inside the cell housing 21. The electrode assembly 23 is a component in which electrochemical reactions occur in the battery cell 20.

The cell housing 21 is a component that provides an accommodating space for accommodating the electrode assembly 23, an electrolyte, and other components. The cell housing 21 includes a housing body 211 with an opening and an end cover 212 for sealing the opening. The housing body 211 and the end cover 212 may be separate components, the housing body 211 is provided with the opening, and the end cover 212 covers the opening to form the internal environment of the battery cell 20. The end cover 212 and the housing body 211 are not limited and may also be integrated. Specifically, the end cover 212 and the housing body 211 may form a shared connection surface before other components are disposed in the housing, and then, the housing body 211 is covered with the end cover 212 and the housing body 211 and the end cover 212 are sealed into an entirety when inside of the housing body 211 needs to be enclosed.

In some embodiments of this disclosure, the electrode terminal includes a connection hole for electrical connection with a sampling component. The sampling component belongs to a sampling assembly of the battery. The sampling assembly is coupled to a battery management system to obtain operational data of the battery, and generally includes a circuit board and a sampling component that is signally connected to the circuit board. The sampling component is configured to obtain the operational data of the battery, for example, temperature and pressure. The circuit board is signally connected to the sampling component to receive the operational data collected by the sampling component and is signally connected to the battery management system to upload the operational data of the battery to the battery management system. The electrode terminal in the embodiments of this disclosure is electrically connected to the sampling component through the connection hole on the electrode terminal, so that the operational parameters of the battery cell in which the electrode terminal is located can be sampled and transmitted to the battery management system through the circuit board. The sampling component may be, for example, a temperature sensor or a pressure sensor, and the circuit board may be, for example, a flexible printed circuit (flexible printed circuit, FPC). Specific forms of the sampling component and circuit board are not limited in this disclosure.

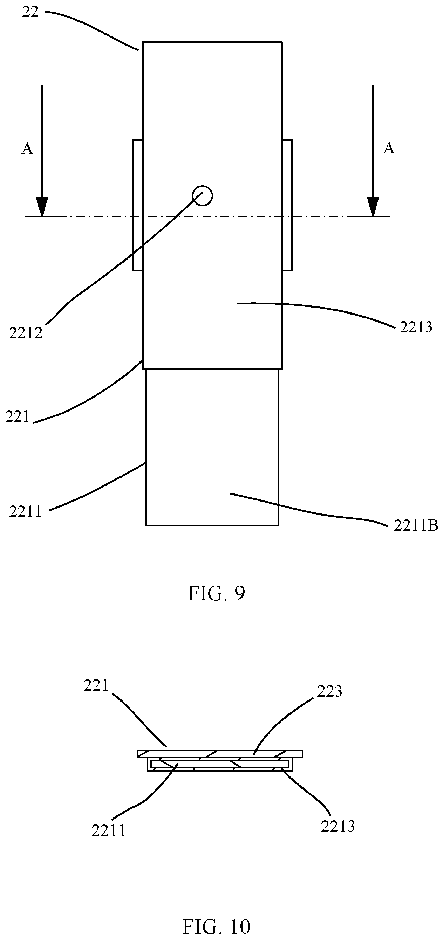

As shown in FIGs. 4 to 10, an embodiment of this disclosure provides an electrode terminal 221 configured to input current to and output current from a battery cell 20. The electrode terminal 221 includes a pole body 2211, and the pole body 2211 includes a first electrical connection portion 2211A and a second electrical connection portion 2211B. The second electrical connection portion 2211B is electrically connected to the first electrical connection portion 2211A, and the second electrical connection portion 2211B is adapted to the first electrical connection portion 2211A in shape, such that electrical connection between the electrode terminals 221 of two battery cells 20 is implemented through fitting in shape between the first electrical connection portion 2211A of one battery cell 20 and the second electrical connection portion 2211B of the other battery cell 20.

For the electrode terminal 221, the first electrical connection portion 2211A is adapted to the second electrical connection portion 2211B in shape, such that electrical connection between the electrode terminals 221 of two battery cells 20 is implemented through fitting in shape between the first electrical connection portion 2211A of the electrode terminal 221 of one battery cell 20 and the second electrical connection portion 2211B of the electrode terminal 221 of the other battery cell 20. In this way, when different battery cells 20 using such electrode terminal 221 are arranged into groups, it is not necessary to implement electrical connection by welding. Instead, it is only necessary to make the first electrical connection portion 2211A of one of two electrode poles 221 of two battery cells 20 in a group fit with the second electrical connection portion 2211B of the other one in shape, making the grouping of corresponding battery cells 20 convenient and quick, reducing the difficulties in disassembly, and avoiding damage to surfaces of battery cells 20 or related components or short circuit caused by welding slag produced. In addition, the electrode terminal 22 of this disclosure integrates the functions of a pole and an electrical connection piece in the related art, simplifying a structure and assembly process of a battery that includes such electrode terminal 22.

As shown in FIGs. 4 to 9, for the electrode terminal 221 in some embodiments, the first electrical connection portion 2211A includes a slot, and the second electrical connection portion 2211B includes a plug adapted to the slot in shape.

The first electrical connection portion 2211A and the second electrical connection portion 2211B are respectively provided as including a slot and a plug. In this way, when two battery cells 20 are arranged into a group, it is only necessary to make the slot of the first electrical connection portion 2211A of one of two electrode terminals 221 to be electrically connected to each other fit with the plug of the second electrical connection portion 2211B of the other one to complete the required electrical connection. This allows for easy grouping, disassembly, and maintenance of battery cells 20.

As shown in FIGs. 4 to 9, for the electrode terminal 221 in some embodiments, the slot is a single flat mouth, and the plug is a plug-in piece adapted to the single flat mouth in shape.

The provision of the slot as a single flat mouth and the plug as a plug-in piece allows for easy processing and operation and high connection stability.

In embodiments not shown in the figures, the connection form of the first electrical connection portion and the second electrical connection portion is not limited thereto. For example, the first electrical connection portion and the second electrical connection portion can be arranged as plug and slot in other forms, such as multiple pins fitting with multiple pin sockets. For another example, the first electrical connection portion and the second electrical connection portion can simultaneously implement structural connection and electrical connection through snap connection.

As shown in FIGs. 4 to 10, for the electrode terminal 221 in some embodiments, the pole body 2211 of the electrode terminal 221 is sheet-shaped.

The pole body 2211 is provided as sheet-shaped, and reasonable arrangement of relative positions of the pole body 2211 and a cell housing 211 of the battery cell 20 allows for smaller distance from a side of the electrode terminal 221 away from the cell housing 21 to the cell housing 21, thus leading to relatively reduced overall sizes of the battery cell 20 and the battery that uses the battery cell 20.

The form of the pole body is not limited to sheet-shaped, for example, it may alternatively be cylindrical, semi-cylindrical, or another form.

As shown in FIGs. 4 to 10, for the electrode terminal 221 in some embodiments, the first electrical connection portion 2211A and the second electrical connection portion 2211B are respectively disposed at two opposite ends of the pole body 2211.

The first electrical connection portion 2211A and the second electrical connection portion 2211B being disposed at two opposite ends of the pole body 2211 makes it easy to achieve docking of the first electrical connection portion 2211A and the second electrical connection portion 2211B when different battery cells 20 are arranged into groups, making the grouping convenient and quick.

The positions of the first electrical connection portion 2211A and the second electrical connection portion 2211B are not limited to being arranged as opposite each other, as long as they are suitable for electrical connection between the electrode terminals 221 of two battery cells 20 to be implemented through fitting in shape between the first electrical connection portion 2211A of one battery cell 20 and the second electrical connection portion 2211B of the other battery cell 20.

For the electrode terminal 221 in some embodiments, the electrode terminal 221 further includes a connection hole 2212 provided in the pole body 2211, where the connection hole 2212 is configured to allow for electrical connection between the pole body 2211 and a sampling component that performs sampling for operational parameters of the battery cell 20 in which the electrode terminal 221 is located.

The provision of the connection hole 2212 on the electrode terminal for electrical connection with the sampling component makes it easy for the sampling component to be electrically connected to the electrode terminal 221 to perform sampling on the battery cell 20. The sampling component and the electrode terminal 221 can be electrically connected through riveting, threaded connections, or the like, which can avoid welding connection, conducive to reducing the damage to the surfaces of related components or the risk of short circuit caused by welding slag.

For the electrode terminal 221 in some embodiments, the electrode terminal 221 further includes a first insulation portion 2213, where the first insulation portion 2213 is disposed on a surface of the pole body 2211.

The provision of the first insulation portion 2213 on the surface of the pole body 2211 of the electrode terminal 221 facilitates electrical insulation between the pole body 2211 and adjacent electrical elements, which helps reduce the risk of short circuit. The first insulation portion 2213 is, for example, an insulation coating or insulation sleeve provided on an outer side of the electrode terminal 221.

For the electrode terminal 221 in some embodiments, the first electrical connection portion 2211A is configured to be electrically connected to an adapter 222 of the battery cell 20, and the first insulation portion 2213 covers at least an outer side of the first electrical connection portion 2211A of the electrode terminal 221.

The above configuration facilitates electrical insulation between a portion, of the pole body 2211, connected to the adapter 222 and adjacent electrical elements, which helps reduce the risk of short circuit.

For the electrode terminal 221 in some embodiments, the first electrical connection portion 2211A is integrally formed with or directly connected to the second electrical connection portion 2211B.

The first electrical connection portion 2211A being integrally formed with or directly connected to the second electrical connection portion 2211B allows for simple and stable electrical structure and convenient and quick processing of the electrode terminal 221.

As shown in FIGs. 4 to 10, an embodiment of this disclosure further provides a pole assembly 22 including the electrode terminal 221 according to the first aspect of this disclosure and an adapter 222. The adapter is electrically connected to the pole body 2221 of the electrode terminal 221, and the adapter 222 is configured to be electrically connected to an electrode assembly 23 of a battery cell 20 in which the adapter 222 is located.

The pole assembly 22 of this disclosure has the advantages of the electrode terminal 221 of this disclosure.

For the pole assembly 22 in some embodiments of this disclosure, the pole body 2211 of the electrode terminal 221 is sheet-shaped, and the adapter 222 is connected to a side of the pole body 2211.

The pole body 2211 is provided as sheet-shaped, and the adapter 222 is connected to a side of the pole body 2211, which can allow for smaller distance from a side of the electrode terminal 221, in the battery cell 20 that uses the pole assembly 22, away from the cell housing 21 to the cell housing 21, thus leading to relatively reduced overall sizes of the battery cell 20 and the battery that uses the battery cell 20.

For the pole assembly 22 in some embodiments of this disclosure, the adapter 222 includes an adapting piece perpendicularly connected to the pole body 2211.

The adapting piece that is perpendicularly connected to the pole body 2211 being provided in the adapter 222 facilitates reasonable arrangement of the electrode assembly 23, cell housing 21, adapter 222, and electrode terminal 221 of the battery cell. This is not only conducive to reducing the volume of the battery cell 20 that uses the pole assembly 22, but also conducive to reducing space occupation during grouping of battery cells 20, so as to help reduce the volume of the battery that uses the battery cell 20.

For the pole assembly 22 in some embodiments of this disclosure, the first electrical connection portion 2211A and the second electrical connection portion 2211B are respectively disposed at two opposite ends of the pole body 2211, and two side surfaces of the adapting piece respectively face toward the first electrical connection portion 2211A and the second electrical connection portion 2211B.

The two side surfaces of the adapting piece respectively facing toward the first electrical connection portion 2211A and the second electrical connection portion 2211B facilitates reasonable arrangement of the electrode assembly 23, cell housing 21, adapter 222, and electrode terminal 221 of the battery cell. This is not only conducive to reducing the volume of the battery cell 20 that uses the pole assembly 22, but also conducive to reducing space occupation during grouping of battery cells 20, so as to help reduce the volume of the battery that uses the battery cell 20.

For the pole assembly 22 in some embodiments of this disclosure, the adapter 222 is integrally formed with or directly connected to the electrode terminal 221.

The adapter 222 being integrally formed with or directly connected to the electrode terminal 221 allows for simple and stable electrical structure and convenient and quick processing of the pole assembly 22.

For the pole assembly 22 in some embodiments of this disclosure, the pole assembly 22 further includes a second insulation portion 223, where the second insulation portion 223 is disposed on a side of the electrode terminal 221 close to the adapter 222.

The second insulation portion 223 being disposed on the side of the electrode terminal 221 close to the adapter 222 is conducive to insulating the pole body 2211 and the adapter 222 from the cell housing 21 of the battery cell 20 after the pole assembly 22 is assembled into the cell housing 21 of the battery cell 20. The second insulation portion 223 is, for example, an insulation pad. When the pole assembly 22 is assembled with the end cover of the battery cell 20, the second insulation portion 223 is located between the electrode terminal 221 and the cell housing 222, so that the electrode terminal 221 and the adapter 222 are electrically insulated from the cell housing 222.

An embodiment of this disclosure further provides a battery including a battery cell 20. The battery cell 20 includes an electrode assembly 23 and the electrode terminal 221 according to the first aspect of this disclosure or the pole assembly 22 according to the second aspect of this disclosure, where the electrode terminal 221 is electrically connected to the electrode assembly 23 of the battery cell 20.

The battery according to some embodiments of this disclosure has the same advantages as the electrode terminal 221 according to the embodiments of this disclosure and the pole assembly 22 according to the embodiments of this disclosure.

For the battery in some embodiments, the battery cell 20 includes two electrode poles 221, where the two electrode poles 221 are electrically connected to an anode tab 232 and cathode tab 233 of the electrode assembly 23 respectively.

The two electrode poles 221 of the battery cell 20 being electrically connected to the anode tab 232 and cathode tab 233 of the electrode assembly 23 respectively allows all electrode poles 221 to implement quick and convenient electrical connections through fitting in shape during grouping of battery cells 20, without the need for welding.

For the battery in some embodiments, two electrode poles 221 of the battery cell 20 are arranged side by side, and an arrangement direction of the first electrical connection portion 2211A and second electrical connection portion 2211B of one electrode terminal 221 is the same as an arrangement direction of the first electrical connection portion 2211A and second electrical connection portion 2211B of the other electrode terminal 221; or two electrode poles 221 of the battery cell 20 are arranged side by side, and an arrangement direction of the first electrical connection portion 2211A and second electrical connection portion 2211B of one electrode terminal 221 is opposite to an arrangement direction of the first electrical connection portion 2211A and second electrical connection portion 2211B of the other electrode terminal 221.

The above arrangement of the electrode terminals 221 of the battery cell 20 allows for flexible arrangement of directions of the electrode terminals 221 based on grouping needs of battery cells 20, facilitating quick grouping of battery cells 20.

For the battery in some embodiments, the battery includes at least two battery cells 20, where electrical connection between the electrode terminals 221 of each adjacent pair of battery cells 20 is implemented through fitting in shape between the first electrical connection portion 2211A of one battery cell 20 and the second electrical connection portion 2211B of the other battery cell 20.

The electrical connection between the electrode terminals 221 of each adjacent pair of battery cells 20 being implemented through fitting in shape between the first electrical connection portion 2211A of the electrode terminal 221 of one battery cell 20 and the second electrical connection portion 2211B of the electrode terminal 221 of the other battery cell 20 allows for electrical connections implemented without welding, making the grouping of battery cells 20 convenient and quick, reducing the difficulties in disassembly, and avoiding damage to surfaces of battery cells or related components or short circuit caused by welding slag produced.

For the battery in some embodiments, the battery cell 20 includes the pole assembly 22, and the adapter 222 of the pole assembly 22 is directly connected to the electrode assembly 23 of the battery cell 20 in which the pole assembly 22 is located.

The adapter 222 being directly connected to the electrode assembly 23 of the battery cell 20 allows for simple and stable electrical structure and convenient and quick processing of the battery cell 20.

An embodiment of this disclosure further provides an electric device including the battery according to the embodiments of this disclosure. The battery is configured to supply power to the electric device.

The electric device according to some embodiments of this disclosure has the same advantages as the battery according to some embodiments of this disclosure.

The following describes the electrode terminal 221, pole assembly 22, and battery B in some embodiments this disclosure with reference to FIGs. 4 to 10.

As shown in FIG. 3, the battery B includes a box 1 and a plurality of battery groups 2 located inside the box 1. The box 1 includes a box shell 11 and a box cover 12. Each battery group 2 includes multiple battery cells 20 arranged into the group. The battery cells 20 arranged into the group are connected in parallel to form the battery group 2.

As shown in FIGs. 4 to 7, the battery cell 20 includes a cell housing 21, a pole assembly 22, and an electrode assembly 23. The cell housing 21 includes a housing body 211 with an opening and an end cover 212 for sealing the opening. The electrode assembly 23 is sealed inside the cell housing 21. The electrode assembly 23 includes a body portion 231 and an anode tab 232 and cathode tab 233 extending from a same side of the body portion 231. One of two pole assemblies 22 is electrically connected to the anode tab 232 of the electrode assembly 23 to serve as an anode pole, and the other is electrically connected to the cathode tab 233 of the electrode assembly 23 to serve as a cathode pole. During assembly of the battery cell, the two pole assemblies 22 are mounted on the end cover 212. The electrode terminal 221 and the second insulation portion 223 are located outside the cell housing 21, the adapter 222 runs through the end cover 212 from the opening in the end cover 212 and is electrically connected to the electrode assembly 23, and then the electrode assembly 23 is put into the housing body 211 and the housing body 211 is sealed with the end cover 212.

Markings can be separately set on the anode pole and the cathode pole to distinguish between the anode pole and the cathode pole during grouping of the battery cells to prevent connection error.

As shown in FIGs. 4 to 6, in this embodiment, two electrode poles 221 of the battery cell 20 are arranged side by side, and an arrangement direction of the first electrical connection portion 2211A and second electrical connection portion 2211B of one electrode terminal 221 is opposite to an arrangement direction of the first electrical connection portion 221 1A and second electrical connection portion 2211B of the other electrode terminal 221.

As shown in FIGs. 4 to 10, in this embodiment, the electrode terminal 221 includes a pole body 2211, a connection hole 2212, and a first insulation portion 2213.

The pole body 2211 includes a first electrical connection portion 2211A and a second electrical connection portion 2211B that are integrally disposed. The pole body 2211 is made of metal, for example, aluminum or copper.

The pole body 2211 of the electrode terminal 221 is sheet-shaped. The first electrical connection portion 2211A and the second electrical connection portion 2211B are respectively disposed at two opposite ends of the pole body 2211.

The first electrical connection portion 2211A includes a single flat mouth as a slot, and the second electrical connection portion 2211B includes a plug-in piece as a plug. The plug-in piece is adapted to the single flat mouth in shape.

As shown in FIGs. 4 to 6, when a plurality of battery cells 20 in the battery B are arranged into groups, for electrode terminals 221, to be connected in correspondence, of each adjacent pair of battery cells 20 in the plurality of battery cells 20, electrical connection between the corresponding electrode terminals 221 of the two battery cells 20 can be implemented by inserting the plug-in piece of the second electrical connection portion 2211B of one electrode terminal 221 into the single flat mouth of the first electrical connection portion 2211A of the other electrode terminal 221.

The connection hole 2212 is configured to allow for electrical connection between the pole body 2211 and a sampling component that performs sampling for operational parameters of the battery cell 20 in which the electrode terminal 221 is located. The sampling component can be electrically connected to the electrode terminal 221 through riveting or threaded connection at the connection hole 2212.

The first insulation portion 2213 is disposed on a surface of the pole body 2211. Specifically, the first insulation portion 2213 is an insulation coating provided on an outer side of the first electrical connection portion 2211A of the electrode terminal 221.

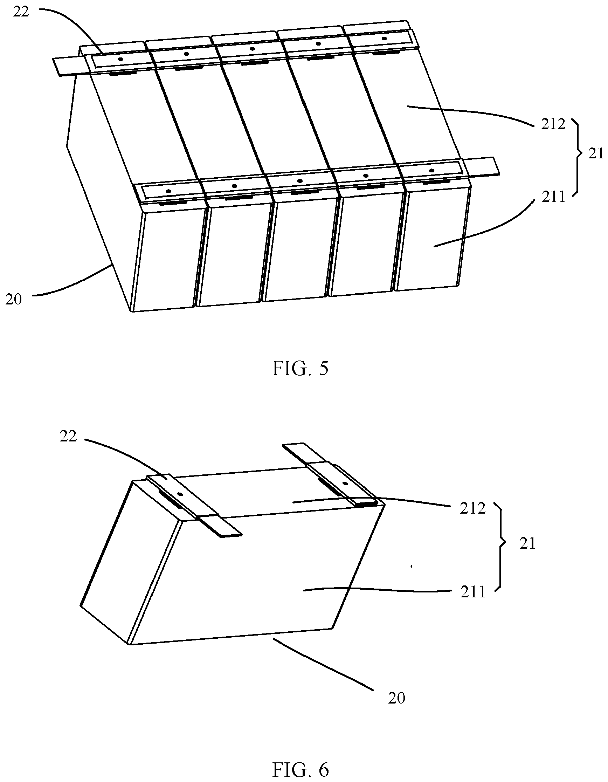

As shown in FIGs. 4 and 5, after at least two electrode terminals 221 are connected in sequence, since the plug-in pieces are inserted into the single flat mouths, only two of the above first electrical connection portions 2211A are located on the outer sides, and the first insulation portions 2213 of all connected electrode terminals 221 can cover all the pole bodies 2211 except for the plug-in piece of the last electrode terminal, thus implementing the insulation of the pole bodies 2211 after the plurality of electrode terminals 221 are connected.

As shown in FIGs. 4 to 10, in this embodiment, the pole assembly 22 includes an electrode terminal 221, an adapter 222, and a second insulation portion 223.

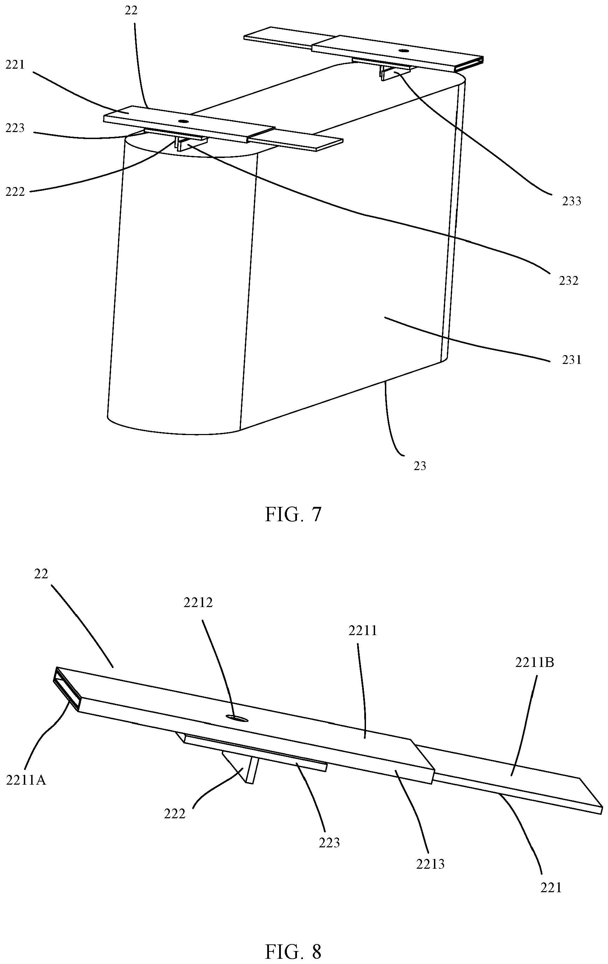

The adapter 222 is welded to a tab of the electrode assembly 23 of the battery cell 20 in which the adapter 222 is located. As shown in FIG. 8, the adapter 222 is sheet-shaped and is perpendicularly welded to a side of the pole body 2211. Two side surfaces of the adapter 222 respectively face toward the first electrical connection portion 2211A and the second electrical connection portion 2211B. In this embodiment, after all parts of the battery cell 20 are assembled, the electrode terminal 221 extends along a direction perpendicular to a large surface of the battery cell 20, with the first electrical connection portion 2211A of the electrode terminal 221 located on the top cover 212, and the second electrical connection portion 2211B of the electrode terminal 221 extending toward an outer side of the top cover 212. When two battery cells 20 are arranged into a group, the second electrical connection portion 2211B can be inserted right into the first electrical connection portion 2211A of the other battery cell 20 until the large surfaces of the two battery cells 20 are attached to each other.

In the embodiment shown in FIGs. 4 to 10, the cell housing 21 of the battery cell 20 is rectangular, and the large surface of the battery cell 20 refers to the largest side surface of the battery cell 20.

In the embodiment shown in FIGs. 4 to 10, the electrode terminal 221 and pole body 2211 of the pole assembly 22 are sheet-shaped, and the side surface of the pole body 2211 connected to the adapter 222 is opposite the top cover 212. After a plurality of battery cells 20 are electrically connected through their respective electrode terminals 221, the connected electrode terminals 221 form a strip.

The second insulation portion 223 is disposed on a side of the electrode terminal 221 close to the adapter 222. The second insulation portion 223 is an insulation pad. When the pole assembly 22 is assembled with the end cover 212 of the battery cell 20, the second insulation portion 223 is located between the electrode terminal 221 and the cell housing 21, so that the electrode terminal 221 and the adapter 222 are electrically insulated from the end cover 212.

As can be seen from the above description, the electrode terminal 221, pole assembly 22, battery B, and electric device D in the embodiments of this disclosure have at least one of the following advantages:

The pole assembly 22 and its electrode terminal 221 in the embodiments of this disclosure being used in a battery cell can implement direct assembly when at least two battery cells 20 are arranged into groups, without the need for a welding process.

Since the pole body 2211 is provided with the connection hole 2212, non-welding connection between the electrode terminal 221 and a sampling component can be implemented. Therefore, when battery cells 20 are arranged into groups the risk that welding slag produced during the welding process for high-and-low-voltage connection can be avoided.

Reasonable arrangement of the structures and positions of the electrode terminal 221 and the adapter 222 is also conducive to simplifying the structures of the battery cell 20 and the battery B that includes such battery cell 20 and to reducing the space occupied.

Since the two opposite ends of the electrode terminal 221 are respectively provided with the slot and the plug, the anode pole and the cathode pole can be arranged as opposite in directions, so as to implement direct plug-in connection during series connection.

Since insulation treatment is performed on the outer layer of the pole body 2211, after a plurality of electrode terminals are connected, there is no high-voltage exposure except for an electrical connection portion (for example, a plug-in piece) that can serve as a lead terminal.

In conclusion, it should be noted that the above embodiments are merely intended for describing the technical solutions of this disclosure but not for limiting this disclosure. Although this application is described in detail with reference to preferred embodiments, persons of ordinary skill in the art should understand that they may still make modifications to specific embodiments of this disclosure or make equivalent replacements to some or all technical features. All such modifications or replacements shall be covered in the scope of the technical solutions claimed in this disclosure.

## Claims

1. An electrode terminal (221), configured to input current to and output current from a battery cell (20) and comprising a pole body (2211), wherein the pole body (2211) comprises:
a first electrical connection portion (2211A); and
a second electrical connection portion (2211B) electrically connected to the first electrical connection portion (2211A) and adapted to the first electrical connection portion (2211A) in shape, such that electrical connection between the electrode terminals (221) of two battery cells (20) is implemented through fitting in shape between the first electrical connection portion (2211A) of one battery cell (20) and the second electrical connection portion (2211B) of the other battery cell (20).

2. The electrode terminal (221) according to claim 1, wherein the first electrical connection portion (2211A) comprises a slot, and the second electrical connection portion (2211B) comprises a plug adapted to the slot in shape.

3. The electrode terminal (221) according to claim 1 or 2, wherein the slot is a single flat mouth, and the plug is a plug-in piece adapted to the single flat mouth in shape.

4. The electrode terminal (221) according to any one of claims 1 to 3, wherein the pole body (2211) is sheet-shaped.

5. The electrode terminal (221) according to any one of claims 1 to 4, wherein the first electrical connection portion (2211A) and the second electrical connection portion (2211B) are respectively disposed at two opposite ends of the pole body (2211).

6. The electrode terminal (221) according to any one of claims 1 to 5, further comprising a connection hole (2212) provided in the pole body (2211), wherein the connection hole (2212) is configured to allow for electrical connection between the pole body (2211) and a sampling component that performs sampling for operational parameters of the battery cell (20) in which the electrode terminal (221) is located.

7. The electrode terminal (221) according to any one of claims 1 to 6, further comprising a first insulation portion (2213), wherein the first insulation portion (2213) is disposed on a surface of the pole body (2211).

8. The electrode terminal (221) according to claim 7, wherein the first electrical connection portion (2211A) is configured to be electrically connected to an adapter (222) of the battery cell (20), and the first insulation portion (2213) covers at least an outer side of the first electrical connection portion (2211A) of the electrode terminal (221).

9. The electrode terminal (221) according to any one of claims 1 to 8, wherein the first electrical connection portion (2211A) is integrally formed with or directly connected to the second electrical connection portion (2211B).

10. A pole assembly (22), comprising:
the electrode terminal (221) according to any one of claims 1 to 9; and
an adapter (222) electrically connected to the pole body (2221) of the electrode terminal (221), wherein the adapter (222) is configured to be electrically connected to an electrode assembly (23) of a battery cell (20) in which the adapter (222) is located.

11. The pole assembly (22) according to claim 10, wherein the pole body (2211) of the electrode terminal (221) is sheet-shaped, and the adapter (222) is connected to a side of the pole body (2211).

12. The pole assembly (22) according to claim 11, wherein the adapter (222) comprises an adapting piece perpendicularly connected to the pole body (2211).

13. The pole assembly (22) according to claim 12, wherein the first electrical connection portion (2211A) and the second electrical connection portion (2211B) are respectively disposed at two opposite ends of the pole body (2211), and two side surfaces of the adapting piece respectively face toward the first electrical connection portion (2211A) and the second electrical connection portion (2211B).

14. The pole assembly (22) according to any one of claims 10 to 13, wherein the adapter (222) is integrally formed with or directly connected to the electrode terminal (221).

15. The pole assembly (22) according to any one of claims 10 to 14, further comprising a second insulation portion (223), wherein the second insulation portion (223) is disposed on a side of the electrode terminal (221) close to the adapter (222).

16. A battery, comprising a battery cell (20), wherein the battery cell (20) comprises:
an electrode assembly (23); and
the electrode terminal (221) according to any one of claims 1 to 9 or the pole assembly (22) according to any one of claims 10 to 15, wherein the electrode terminal (221) is electrically connected to the electrode assembly (23) of the battery cell (20).

17. The battery according to claim 16, wherein the battery cell (20) comprises two electrode poles (221), and the two electrode poles (221) are electrically connected to an anode tab (232) and cathode tab (233) of the electrode assembly (23) respectively.

18. The battery according to claim 16 or 17, wherein
two electrode poles (221) of the battery cell (20) are arranged side by side, and an arrangement direction of the first electrical connection portion (2211A) and second electrical connection portion (2211B) of one electrode terminal (221) is the same as an arrangement direction of the first electrical connection portion (2211A) and second electrical connection portion (2211B) of the other electrode terminal (221); or
two electrode poles (221) of the battery cell (20) are arranged side by side, and an arrangement direction of the first electrical connection portion (2211A) and second electrical connection portion (2211B) of one electrode terminal (221) is opposite to an arrangement direction of the first electrical connection portion (2211A) and second electrical connection portion (2211B) of the other electrode terminal (221).

19. The battery according to any one of claims 16 to 18, comprising at least two battery cells (20), wherein electrical connection between the electrode terminals (221) of each adjacent pair of battery cells (20) is implemented through fitting in shape between the first electrical connection portion (2211A) of one battery cell (20) and the second electrical connection portion (2211B) of the other battery cell (20).

20. The battery according to any one of claims 16 to 19, wherein the battery cell (20) comprises the pole assembly (22), and the adapter (222) of the pole assembly (22) is directly connected to the electrode assembly (23) of the battery cell (20) in which the pole assembly (22) is located.

21. An electric device, comprising the battery according to any one of claims 16 to 20, wherein the battery is configured to supply power to the electric device.
